# EUROPEAN PATENT SPECIFICATION

(11) **EP 2 204 291 B1**
(45) Date of publication and mention of the grant of the patent: **22.06.2011**
(21) Application number: 09000068.8
(22) Date of filing: 06.01.2009
(51) Int. Cl.: B60B 27/02, F16D 41/30

(54) **Bicycle hub that will not drive the pedal and will not produce noise when the hub is rotated in the backward direction**
Fahrradnabe, die das Pedal nicht bewegt und keine Geräusche erzeugt, wenn sich die Nabe beim Rückwärtstreten dreht
Moyeu de bicyclette qui n'entraîne pas la pédale et ne génère pas de bruit lorsque le moyeu tourne vers l'arrière

(43) Date of publication of application: 07.07.2010
(73) Proprietor: Chosen Co., Ltd., Sheng Sei Shung, Changhua Hsien (TW)
(72) Inventor: Chen, Ching-Shu, Changhua City, Changhua County (TW)
(74) Representative: Reichel, Wolfgang

(56) References cited:
- EP-A1- 1 148 264
- EP-A2- 0 549 570
- EP-A2- 0 787 922
- EP-A2- 1 881 221
- DE-A1- 3 242 371
- GB-A- 1 135 818
- JP-A- 56 164 232

## Description

The present invention relates to a hub and, more particularly, to a ratchet hub for a bicycle.

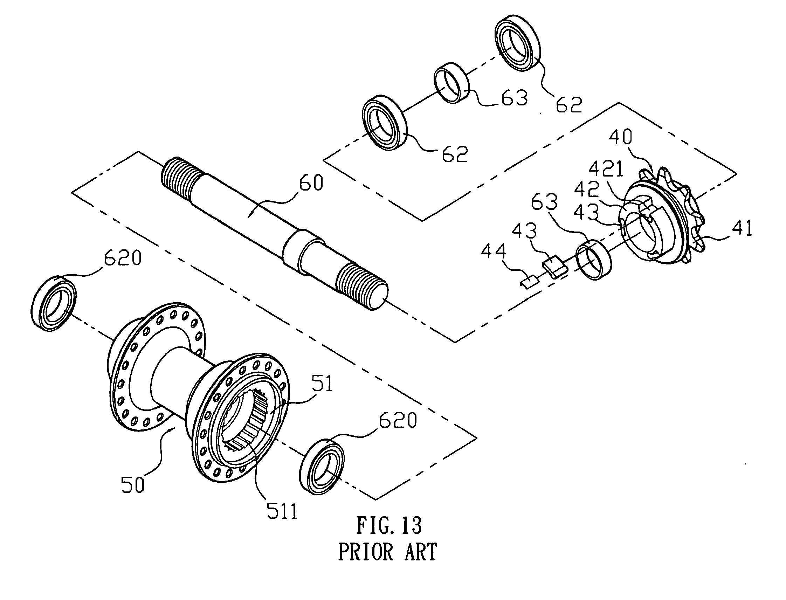

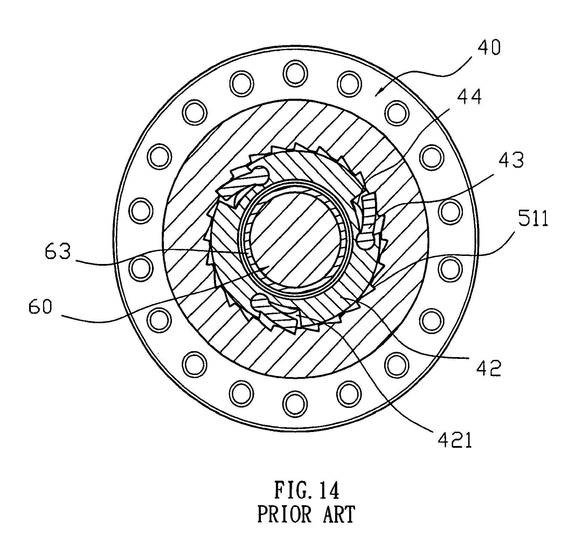

A conventional hub for a bicycle in accordance with the prior art shown in Figs. 13 and 14 comprises a shaft 60, a hub body 50 rotatably mounted on the shaft 60, a ratchet wheel 51 secured in the hub body 50 to drive the hub body 50 to rotate relative to the shaft 60 and having an inside provided with a plurality of oneway ratchet teeth 511, a drive seat 40 rotatably mounted on the shaft 60 and having a first end provided with a support base 42 which is rotatable in the ratchet wheel 51 and has a periphery provided with a plurality of receiving slots 421, a plurality of pawl members 43 each pivotally mounted in a respective one of the receiving slots 421 of the support base 42 and each meshing with the oneway ratchet teeth 511 of the ratchet wheel 51 so that the ratchet wheel 51 is combined with and rotatable with the support base 42 of the drive seat 40, a plurality of elastic members 44 each biased between the support base 42 of the drive seat 40 and a respective one of the pawl members 43, at least one first bearing 62 and at least one bushing 63 mounted between the drive seat 40 and the shaft 60, and at least one second bearing 620 mounted between the hub body 50 and the shaft 60. The drive seat 40 has a second end provided with a freewheel 41.

In assembly, the hub body 50 is connected to a wheel (not shown) of the bicycle, the shaft 60 is connected to a frame (not shown) of the bicycle, the freewheel 41 of the drive seat 40 meshes with and is driven by a chain (not shown) which is driven by a chainwheel (not shown) which is driven by a pedal (not shown) that is pedalled by a rider.

In operation, when the pedal is pedalled by the rider to move forward, the chainwheel is driven by the pedal to drive the chain which drives the freewheel 41 of the drive seat 40 so as to rotate the drive seat 40 forward relative to the shaft 60, so that each of the pawl members 43 is rotatable forward with the support base 42 of the drive seat 40. At this time, each of the pawl members 43 meshes with the oneway ratchet teeth 511 of the ratchet wheel 51 so that the ratchet wheel 51 is driven by each of the pawl members 43 to drive the hub body 50 to rotate relative to the shaft 60 so as to move the wheel forward. On the contrary, when the pedal is pedalled by the rider to move backward, the chainwheel is driven by the pedal to drive the chain which drives the freewheel 41 of the drive seat 40 so as to rotate the drive seat 40 backward relative to the shaft 60, so that each of the pawl members 43 is rotatable backward with the support base 42 of the drive seat 40. At this time, each of the pawl members 43 passes by the oneway ratchet teeth 511 of the ratchet wheel 51 so that the ratchet wheel 51 is released from the oneway ratchet teeth 511 of the ratchet wheel 51. Thus, the ratchet wheel 51 together with the hub body 50 is not driven by the drive seat 40, and the drive seat 40 idles in the backward direction.

However, when each of the pawl members 43 passes by the oneway ratchet teeth 511 of the ratchet wheel 51 during the backward rotation of the drive seat 40, each of the pawl members 43 touches the oneway ratchet teeth 511 of the ratchet wheel 51 to produce noise due to the friction, thereby easily causing an uncomfortable sensation to the rider. In addition, when the hub body 50 is rotated in the backward direction (e.g., when the wheel is rotated backward by the rider), the ratchet wheel 51 is also rotated in the backward direction. At this time, each of the pawl members 43 meshes with the oneway ratchet teeth 511 of the ratchet wheel 51 so that the ratchet wheel 51 drives each of me pawl members 43 to drive the drive seat 40 to rotate relative to the shaft 60 in the backward direction. Thus, the pedal is driven by the drive seat 40 to rotate backward so that the rider is easily hit and hurt by the pedal, thereby causing danger to the rider.

GB1135818 discloses a hub for a bicycle according to the preamble of claim 1. In order to reduce noise during the backward rotation, the hub comprises a claw ring having a first claw and a second claw. The claw ring is frictionally engaged with one side surface of a ratchet wheel. The claws cooperate with a ratchet pawl, respectively, and urge the ratchet pawl in a first position or a second position depending on the sense of rotation, respectively. In the first position during forward rotation, the ratchet pawls engage with the ratchet wheel. In the second position during backward rotation, the ratchet pawls are moved clear of the ratchet wheel. Therefore, noise produced due to friction between the ratchet pawls and the ratchet wheel is reduced during backward rotation.

Further hubs are disclosed in JP56164232, EP1148264, EP0549570, DE3242371, EP0787922, and EP1881221. EP1148264, EP0787922, and EP1881221 refer as well to the reduction of noise produced in hubs for bicycles during backward rotation. However, the structures of these hubs distinguish considerably from the structure of the hub according the present invention.

The primary objective of the present invention is to provide a bicycle hub that will not drive the pedal and will not produce noise when the hub is rotated in the backward direction.

In accordance with the present invention, there is provided hub for a bicycle, comprising a shaft, a hub body rotatably mounted on the shaft, a ratchet wheel secured in the hub body to drive the hub body to rotate relative to the shaft and having an inner wall provided with a plurality of oneway ratchet teeth, a damper mounted between the shaft and the hub body and having a periphery provided with a plurality of guide slots, a drive seat rotatably mounted on the shaft and having a support base which is rotatable in the ratchet wheel and has a periphery provided with a plurality of receiving slots, and a plurality of pawl members each pivotally mounted in a respective one of the receiving slots of the support base of the drive seat and each having a side provided with a guide post which is movable in a respective one of the guide slots of the damper to drive each of the pawl members to move between a first position where each of the pawl members meshes with the oneway ratchet teeth of the ratchet wheel so that the ratchet wheel is combined with and rotatable with the support base of the drive seat and a second position where each of the pawl members is detached from the oneway ratchet teeth of the ratchet wheel so that the ratchet wheel is released from and non-rotatable with the support base of the drive seat.

Further benefits and advantages of the present invention will become apparent after a careful reading of the detailed description with appropriate reference to the accompanying drawings.

In the drawings:
Fig. 1 is a perspective view of a hub for a bicycle in accordance with the preferred embodiment of the present invention.
Fig. 2 is an exploded perspective view of the hub for a bicycle as shown in Fig. 1.
Fig. 3 is a partially front cross-sectional view of the hub for a bicycle as shown in Fig. 1.
Fig. 4 is a cross-sectional view of the hub for a bicycle taken along line 4-4 as shown in Fig. 3.
Fig. 5 is a cross-sectional view of the hub for a bicycle taken along line 5-5 as shown in Fig. 3.
Fig. 6 is a schematic operational view of the hub for a bicycle as shown in Fig. 4.
Fig. 7 is a schematic operational view of the hub for a bicycle as shown in Fig. 5.
Fig. 8 is a perspective view of a pawl member of the hub for a bicycle as shown in Fig. 2.
Fig. 9 is a perspective view of a pawl member of a hub for a bicycle in accordance with another preferred embodiment of the present invention.
Fig. 10 is a perspective view of a hub for a bicycle in accordance with another preferred embodiment of the present invention.
Fig. 11 is a perspective enlarged view of a damper of the hub for a bicycle as shown in Fig. 2.
Fig. 12 is a perspective enlarged view of a damper of a hub for a bicycle in accordance with another preferred embodiment of the present invention.
Fig. 13 is an exploded perspective view of a conventional hub for a bicycle in accordance with the prior art.
Fig. 14 is a side cross-sectional assembly view of the conventional hub for a bicycle as shown in Fig. 11.

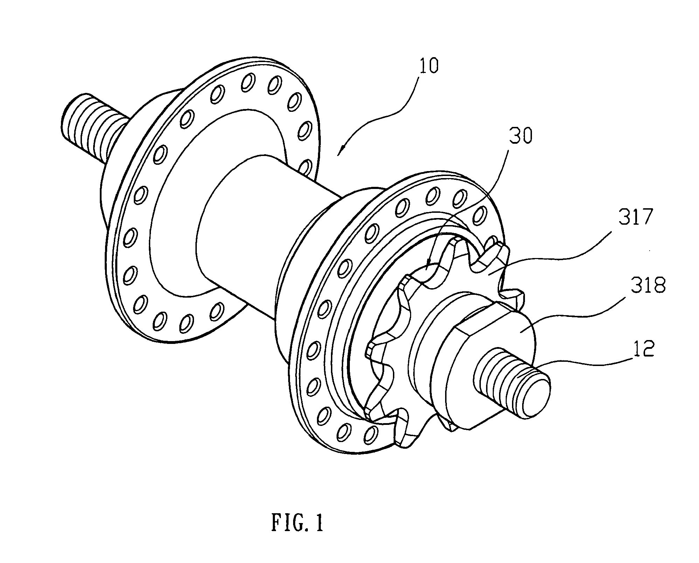

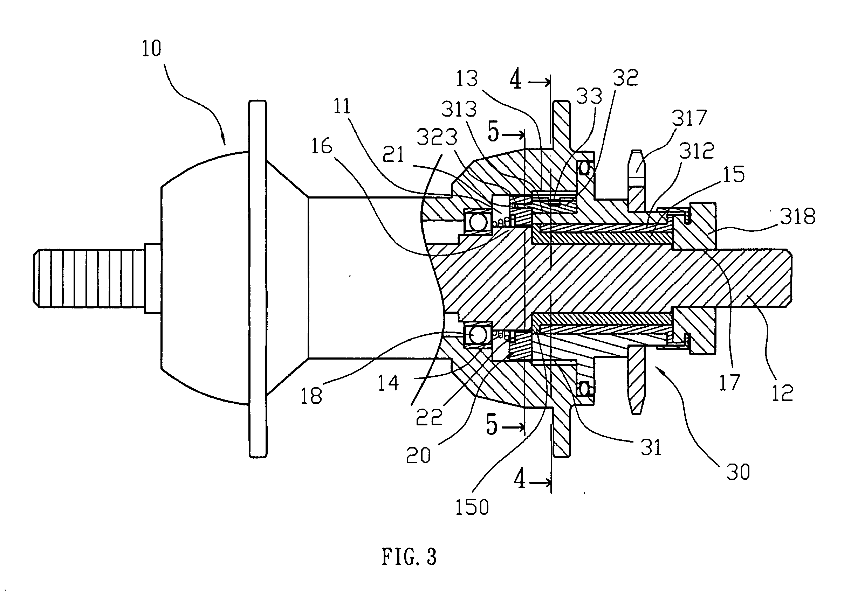

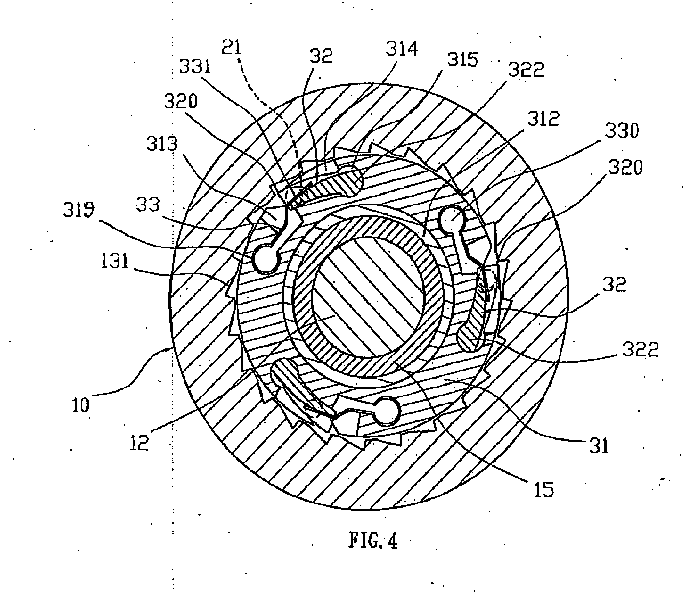

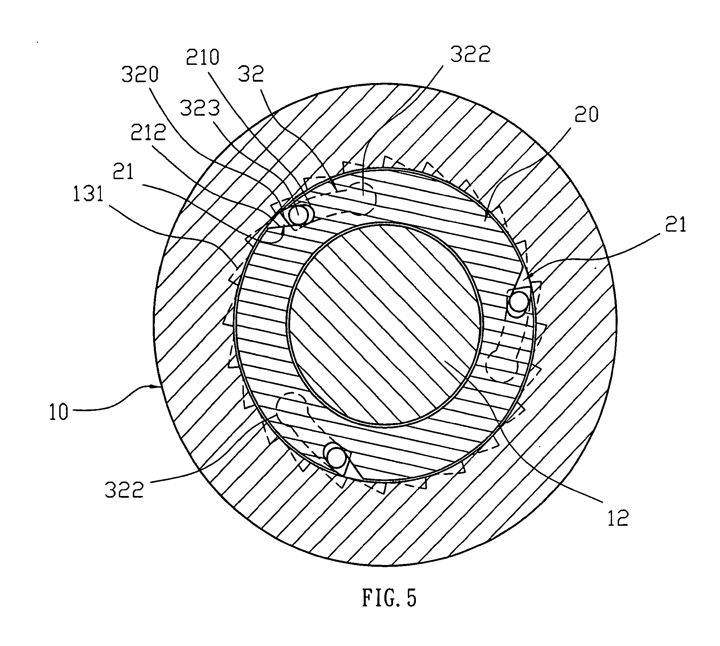

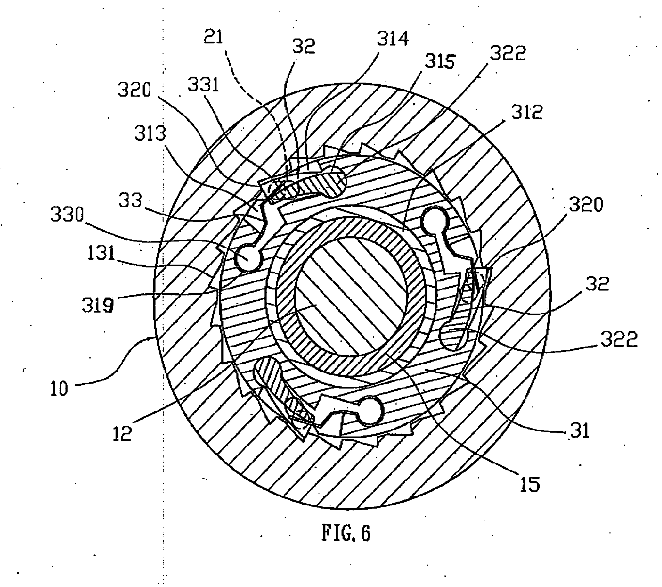

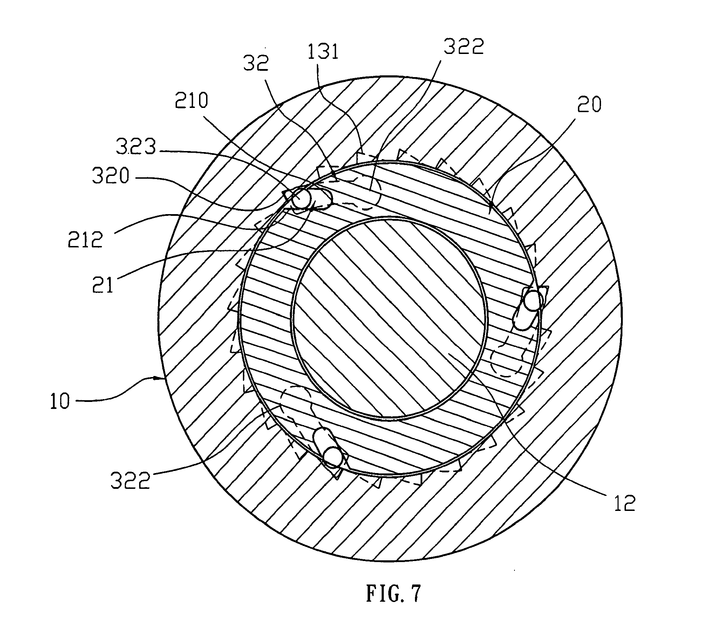

Referring to the drawings and initially to Figs. 1-5, a hub for a bicycle in accordance with the preferred embodiment of the present invention comprises a shaft 12, a hub body 10 rotatably mounted on the shaft 12, a ratchet wheel 13 secured in the hub body 10 to drive the hub body 10 to rotate relative to the shaft 12 and having an inner wall provided with a plurality of oneway ratchet teeth 131, a damper 20 mounted between the shaft 12 and the hub body 10 and having a periphery provided with a plurality of guide slots 21, a drive seat 30 rotatably mounted on the shaft 12 and having a support base 31 which is rotatable in the ratchet wheel 13 and has a periphery provided with a plurality of receiving slots 313, a plurality of pawl members 32 each pivotally mounted in a respective one of the receiving slots 313 of the support base 31 of the drive seat 30 and each having a side provided with a guide post 323 which is movable in a respective one of the guide slots 21 of the damper 20 to drive each of the pawl members 32 to move between a first position as shown in Figs. 6 and 7 where each of the pawl members 32 meshes with the oneway ratchet teeth 131 of the ratchet wheel 13 so that the ratchet wheel 13 is combined with and rotatable with the support base 31 of the drive seat 30 and a second position as shown in Figs. 4 and 5 where each of the pawl members 32 is detached from the oneway ratchet teeth 131 of the ratchet wheel 13 so that the ratchet wheel 13 is released from and non-rotatable with the support base 31 of the drive seat 30, and a plurality of elastic plates 33 each pivotally mounted on the support base 31 of the drive seat 30 and each pressing a respective one of the pawl members 32 to detach the respective pawl member 32 from the oneway ratchet teeth 131 of the ratchet wheel 13 at a normal state.

The drive seat 30 has a central portion provided with a shaft hole 311. The drive seat 30 has a first end provided with the support base 31 and a second end provided with a freewheel 317. The support base 31 of the drive seat 30 has a substantially cylindrical shape and abuts the damper 20 so that the damper 20 is locate between the hub body 10 and the support base 31 of the drive seat 30. Each of the receiving slots 313 of the support base 31 has an oblique shape and has a bottom provided with a pivot hole 315. The periphery of the support base 31 is provided with a plurality of retaining grooves 314 each facing a respective one of the receiving slots 313 to receive a respective one of the elastic plates 33. Each of the retaining grooves 314 of the support base 31 has an oblique shape and has a bottom provided with a pivot bore 319.

Each of the pawl members 32 has an oblique shape and has a peripheral wall provided with a limit groove 321 to receive the respective elastic plate 33. Each of the pawl members 32 is rotatable with the support base 31 of the drive seat 30 and is rotatable relative to the damper 20 and the shaft 12. Each of the pawl members 32 has a first end provided with an enlarged pivot fulcrum 322 pivotally mounted in the pivot hole 315 of the respective receiving slot 313 of the support base 31 and a second end provided with a locking detent 320 which is movable with the guide post 323 to mesh with or detach from the oneway ratchet teeth 131 of the ratchet wheel 13. The second end of each of the pawl members 32 is provided with the guide post 323.

Each of the elastic plates 33 is pivotally mounted in a respective one of the retaining grooves 314 of the support base 31 and has a first end provided with an enlarged pivot portion 330 pivotally mounted in the pivot bore 319 of the respective retaining groove 314 of the support base 31 and a second end provided with a pressing portion 331 which presses the locking detent 320 of the respective pawl member 32 and is received in the limit groove 321 of the respective pawl member 32.

The hub body 10 has an inner wall provided with a stepped receiving chamber 11 located beside the ratchet wheel 13 to receive the damper 20.

The shaft 12 has a mediate portion provided with an enlarged stop ring 16 and has two opposite ends each provided with an outer thread 17.

The hub further comprises a biasing member 14 mounted on the stop ring 16 of the shaft 12 and biased between the hub body 10 and the damper 20 to push the damper 20 toward the support base 31 of the drive seat 30, a bearing 18 mounted in the receiving chamber 11 or the hub body 10 and located between the hub body 10 and the biasing member 14 so that the biasing member 14 is biased between the bearing 18 and the damper 20, a positioning bushing 15 mounted between the shaft 12 and the drive seat 30 and having an enlarged first end 150 abutting the stop ring 16 of the shaft 12 and the damper 20, a self-lubricating bearing 312 mounted between the positioning bushing 15 and the drive seat 30, and a locking nut screwed onto the respective outer thread 17 of the shaft 12 and abutting a second end of the positioning bushing 15 and the self-lubricating bearing 312. The positioning bushing 15 and the self-lubricating bearing 312 are mounted in the shaft hole 311 of the drive seat 30.

The damper 20 has a ring shape and is frictionally mounted on the stop ring 16 of the shaft 12. The damper 20 has an outer diameter smaller than an inner diameter of the ratchet wheel 13. The damper 20 has a side provided with a retaining recess 22 for retaining the biasing member 14. Each of the guide slots 21 of the damper 20 is an oblique slot and has an inner side 210 and an outer side 212, wherein the inner side 210 is located between the shaft 12 and the outer side 212, and the outer side 212 is located between the inner side 210 and the oneway ratchet teeth 131 of the ratchet wheel 13.

In assembly, the hub body 10 is connected to a wheel (not shown) of the bicycle, the shaft 12 is connected to a frame (not shown) of the bicycle, the freewheel 317 of the drive seat 30 meshes with and is driven by a chain (not shown) which is driven by a chainwheel (not shown) which is driven by a pedal (not shown) that is pedalled by a rider.

In operation, referring to Figs. 4-7 with reference to Figs. 1-3, each of the pawl members 32 is pressed by the respective elastic plate 33 as shown in Fig. 4 to detach from the oneway ratchet teeth 131 of the ratchet wheel 13, so that the ratchet wheel 13 is released from and non-rotatable with the support base 31 of the drive seat 30 at a normal state. At this time, the guide post 323 of each of the pawl members 32 is located at the inner side 210 of the respective guide slot 21 of the damper 20 as shown in Fig. 5.

In such a manner, when the pedal is pedalled by the rider to move forward, the chainwheel is driven by the pedal to drive the chain which drives the freewheel 317 of the drive seat 30 so as to rotate the drive seat 30 forward relative to the shaft 12, so that each of the pawl members 32 is rotatable with the support base 31 of the drive seat 30 and is rotatable relative to the damper 20 and the shaft 12, and the guide post 323 of each of the pawl members 32 is also movable relative to the damper 20. At this time, the guide post 323 of each of the pawl members 32 is limited in the respective guide slot 21 of the damper 20, and the damper 20 is temporarily positioned on the stop ring 16 of the shaft 12 by the biasing member 14 to provide a resistance to the guide post 323 of each of the pawl members 32, so that the guide post 323 of each of the pawl members 32 is movable in the respective guide slot 21 of the damper 20 toward the outer side 212 of the respective guide slot 21 as shown in Fig. 7 to drive each of the pawl members 32 to pivot outwardly relative to the respective receiving slot 313 of the support base 31, and the locking detent 320 of each of the pawl members 32 is movable outwardly relative to the respective receiving slot 313 of the support base 31 to mesh with the oneway ratchet teeth 131 of the ratchet wheel 13 as shown in Fig. 6. Thus, the ratchet wheel 13 is combined with and rotatable with the support base 31 of the drive seat 30, so that the ratchet wheel 13 is driven by the drive seat 30 to drive the hub body 10 to rotate relative to the shaft 12 so as to move the wheel forward. At this time, the damper 20 is driven by the guide post 323 of each of the pawl members 32 when the force applied by the drive seat 30 is greater than the friction between the damper 20 and the stop ring 16 of the shaft 12, so that the damper 20 is also rotatable with the drive seat 30 to rotate relative to the shaft 12.

On the contrary, when the pedal is pedalled by the rider to move backward, the chainwheel is driven by the pedal to drive the chain which drives the freewheel 317 of the drive seat 30 so as to rotate the drive seat 30 backward relative to the shaft 12, so that each of the pawl members 32 is rotatable with the support base 31 of the drive seat 30 and is rotatable relative to the damper 20 and the shaft 12. At this time, the guide post 323 of each of the pawl members 32 is limited in the respective guide slot 21 of the damper 20, and the damper 20 is temporarily positioned on the stop ring 16 of the shaft 12 by the biasing member 14 to provide a resistance to the guide post 323 of each of the pawl members 32, so that the guide post 323 of each of the pawl members 32 is movable in the respective guide slot 21 of the damper 20 toward the inner side 210 of the respective guide slot 21 as shown in Fig. 5 to drive each of the pawl members 32 to pivot inwardly relative to and retract into the respective receiving slot 313 of the support base 31, and the locking detent 320 of each of the pawl members 32 is movable inwardly relative to the respective receiving slot 313 of the support base 31 to detach from the oneway ratchet teeth 131 of the ratchet wheel 13 as shown in Fig. 4. Thus, the ratchet wheel 13 is released from and not rotatable with the support base 31 of the drive seat 30, so that the ratchet wheel 13 together with the hub body 10 is not driven by the drive seat 30, and the drive seat 30 idles. At this time, the damper 20 is driven by the guide post 323 of each of the pawl members 32 when the force applied by the drive seat 30 is greater than the friction between the damper 20 and the stop ring 16 of the shaft 12, so that the damper 20 is rotatable with the drive seat 30 to rotate relative to the shaft 12.

Thus, when the pedal is driven backward (and the drive seat 30 is rotated backward), each of the pawl members 32 is fully hidden in the respective receiving slot 313 of the support base 31, and the locking detent 320 of each of the pawl members 32 is detached from the oneway ratchet teeth 131 of the ratchet wheel 13 constantly, so that each of the pawl members 32 will not touch the ratchet wheel 13 when the pedal is driven backward to prevent from incurring a noise when the pedal is driven backward. In addition, when the pedal is driven backward, each of the pawl members 32 is fully hidden in the respective receiving slot 313 of the support base 31, and the locking detent 320 of each of the pawl members 32 is detached from the oneway ratchet teeth 131 of the ratchet wheel 13 constantly, so that the hub body 10 is separated from the drive seat 30, and rotation of the hub body 10 will not drive the drive seat 30 and the pedal to prevent the pedal from being driven when the hub body 10 is rotated backward.

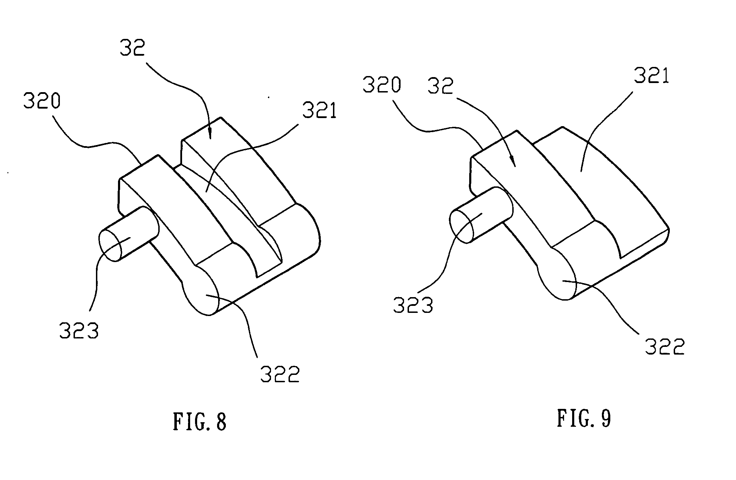

Referring to Fig. 8, the limit groove 321 of each of the pawl members 32 is located at a middle position of each of the pawl members 32.

Referring to Fig. 9, the limit groove 321 of each of the pawl members 32 is located at a side of each of the pawl members 32.

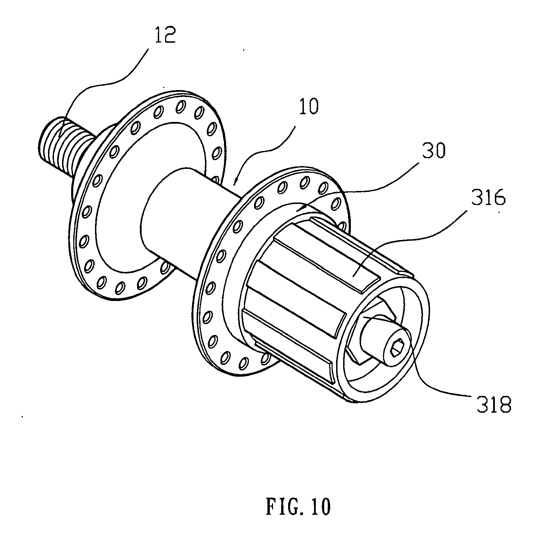

Referring to Fig. 10, the drive seat 30 has a second end provided with a tubular freewheel 316.

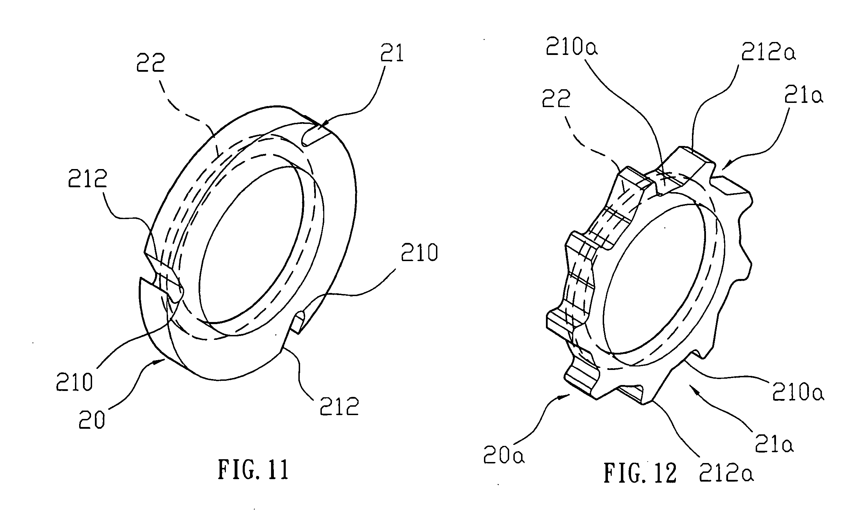

Referring to Fig. 11, the damper 20 has a ring shape. Each of the guide slots 21 of the damper 20a is an oblique slot.

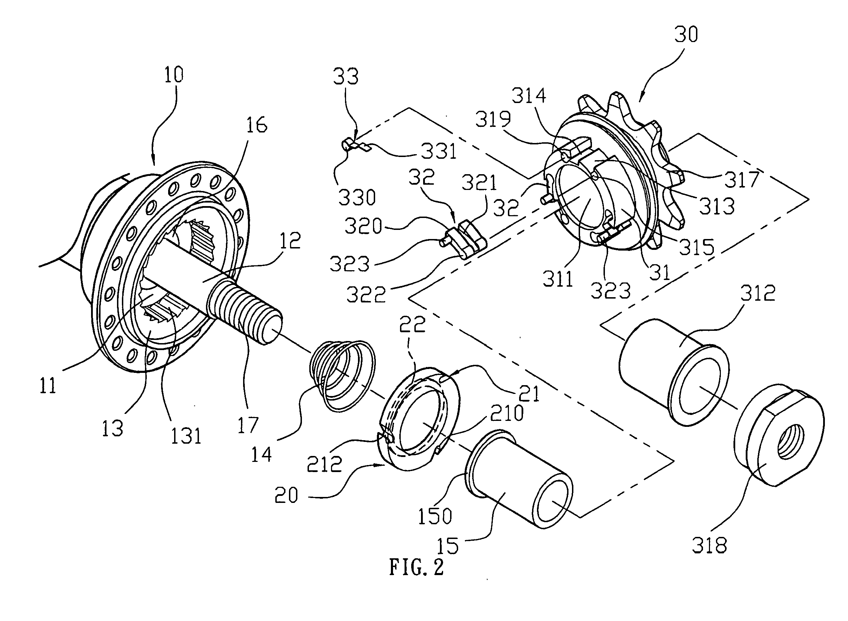

Referring to Figs. 2 and 12, the damper 20a has a star shape. Each of the guide slots 21a of the damper 20a is an arcuate slot and has an inner side 210a and an outer side 212a, wherein the inner side 210a is located between the shaft 12 and the outer side 212a, and the outer side 212a is located between the inner side 210a and the oneway ratchet teeth 131 of the ratchet wheel 13.

Accordingly, when the pedal is driven backward (and the drive seat 30 is rotated backward), each of the pawl members 32 is fully hidden in the respective receiving slot 313 of the support base 31, and the locking detent 320 of each of the pawl members 32 is detached from the oneway ratchet teeth 131 of the ratchet wheel 13 constantly, so that each of the pawl members 32 will not touch the ratchet wheel 13 when the pedal is driven backward to prevent from incurring a noise when the pedal is driven backward. In addition, when the pedal is driven backward, each of the pawl members 32 is fully hidden in the respective receiving slot 313 of the support base 31, and the locking detent 320 of each of the pawl members 32 is detached from the oneway ratchet teeth 131 of the ratchet wheel 13 constantly, so that the hub body 10 is separated from the drive seat 30, and rotation of the hub body 10 will not drive the drive seat 30 and the pedal to prevent the pedal from being driven when the hub body 10 is rotated backward.

## Claims

1. A hub for a bicycle, comprising:
a shaft (12);
a hub body (10) rotatably mounted on the shaft;
a ratchet wheel (13) secured in the hub body to drive the hub body to rotate relative to the shaft and having an inner wall provided with a plurality of oneway ratchet teeth (131);
a drive seat (30) rotatably mounted on the shaft and having a support base (31) which is rotatable in the ratchet wheel and
has a periphery provided with a plurality of receiving slots (313);
a plurality of pawl members (32) each pivotally mounted in a respective one of the receiving slots of the support base of the drive seat;
**characterized in that**
the hub further comprises a damper (20) mounted between the shaft and the hub body and having a periphery provided with a plurality of guide slots (21); and that
each of the plurality of pawl members (32) has a side provided with a guide post (323) which is movable in a respective one of the guide slots of the damper to drive each of the pawl members to move between a first position where each of the pawl members meshes with the oneway ratchet teeth of the ratchet wheel so that the ratchet wheel is combined with and rotatable with the support base of the drive seat and a second position where each of the pawl members is detached from the oneway ratchet teeth of the ratchet wheel so that the ratchet wheel is released from and non-rotatable with the support base of the drive seat.

2. The hub for a bicycle of claim 1,
**characterized in that**
the hub further comprises:
a plurality of elastic plates (33) each pivotally mounted on the support base of the drive seat and each pressing a respective one of the pawl members to detach the respective pawl member from the oneway ratchet teeth of the ratchet wheel at a normal state.

3. The hub for a bicycle of claim 2,
**characterized in that**
each of the receiving slots of the support base has a bottom
provided with a pivot hole (315); and that
each of the pawl members has a first end provided with an enlarged pivot fulcrum (322) pivotally mounted in the pivot hole of the respective receiving slot of the support base and a second end provided with a locking detent (320) which is movable with the guide post to mesh with or detach from the oneway ratchet teeth of the ratchet wheel.

4. The hub for a bicycle of claim 3,
**characterized in that**
the second end of each of the pawl members is provided with the guide post.

5. The hub for a bicycle of claim 3,
**characterized in that**
the periphery of the support base is provided with a plurality of retaining grooves (314) each facing a respective one of the receiving slots to receive a respective one of the elastic plates; and that
each of the elastic plates is pivotally mounted in a respective one of the retaining grooves of the support base.

6. The hub for a bicycle of claim 5,
**characterized in that**
each of the retaining grooves of the support base has a bottom provided with a pivot bore (319); and that
each of the elastic plates has a first end provided with an enlarged pivot portion (330) pivotally mounted in the pivot bore (319) of the respective retaining groove of the support base and a second end provided with a pressing portion (331) which presses the locking detent of the respective pawl member.

7. The hub for a bicycle of claim 6,
**characterized in that**
each of the pawl members has a peripheral wall provided with a limit groove (321) to receive the respective elastic plate; and that
the pressing portion of each of the elastic plates is received in the limit groove of the respective pawl member.

8. The hub for a bicycle of claim 7,
**characterized in that**
the limit groove of each of the pawl members is located at a middle position of each of the pawl members.

9. The hub for a bicycle of claim 7,
**characterized in that**
the limit groove of each of the pawl members is located at a side of each of the pawl members.

10. The hub for a bicycle of claim 3,
**characterized in that**
each of the guide slots of the damper has an inner side (210) and an outer side (212); that
the inner side of each of the guide slots is located between the shaft and the outer side of each of the guide slots; and that
the outer side each of the guide slots is located between the inner side of each of the guide slots and the oneway ratchet teeth of the ratchet wheel.

11. The hub for a bicycle of claim 10,
**characterized in that**
when the locking detent of each of the pawl members is movable to detach from the oneway ratchet teeth of the ratchet wheel, the guide post of each of the pawl members is located at the inner side of the respective guide slot of the damper; and that
when the locking detent of each of the pawl members is movable to mesh with the oneway ratchet teeth of the ratchet wheel, the guide post of each of the pawl members is located at the outer side of the respective guide slot of the damper.

12. The hub for a bicycle of claim 1,
**characterized in that**
the shaft has a mediate portion provided with an enlarged stop ring (16) and has two opposite ends each provided with an outer thread (17); and that
the hub further comprises:
a biasing member (14) mounted on the stop ring of the shaft and biased between the hub body and the damper to push the damper toward the support base of the drive seat;
a positioning bushing (15) mounted between the shaft and the drive seat and having an enlarged first end (150) abutting the stop ring of the shaft and the damper;
a self-lubricating bearing (312) mounted between the positioning bushing and the drive seat;
a locking nut (318) screwed onto the respective outer thread of the shaft and abutting a second end of the positioning bushing and the self-lubricating bearing;
the damper has a side provided with a retaining recess (22) for retaining the biasing member;
the drive seat has a central portion provided with a shaft hole (311);
the positioning bushing and the self-lubricating bearing are mounted in the shaft hole of the drive seat.

13. The hub for a bicycle of claim 12,
**characterized in that**
the hub further comprises:
a bearing (18) mounted in the receiving chamber of the hub body and located between the hub body and the biasing member;
wherein the biasing member is biased between the bearing and the damper.

14. The hub for a bicycle of claim 10,
**characterized in that**
the damper has a ring shape; and that
each of the guide slots of the damper is an oblique slot.

15. The hub for a bicycle of claim 10,
**characterized in that**
the damper (20a) has a star shape; and that
each of the guide slots (21a) of the damper is an arcuate slot.

## Patentansprüche

1. Nabe für ein Fahrrad, umfassend:
eine Achse (12);
einen Nabenkörper (10), der drehbeweglich auf die Achse montiert ist;
ein Rastrad (13), das in dem Nabenkörper gesichert ist, um den Nabenkörper anzutreiben, so dass dieser sich relativ zu der Achse dreht, und welches eine Innenwand aufweist, die mit einer Mehrzahl von Einrichtungs-Rastzähnen (131) versehen ist;
eine Antriebsaufnahme (30), die drehbeweglich auf die Achse montiert ist und einen Lager-Grundkörper (31) aufweist, der in dem Rastrad drehbeweglich ist und einen Umfang aufweist, der mit einer Mehrzahl von Aufnahmenuten (313) versehen ist;
eine Mehrzahl von Klinkenelementen (32), die jeweils schwenkbar in einer jeweiligen der Aufnahmenuten des Lager-Grundkörpers der Antriebsaufnahme aufgenommen sind;
**dadurch gekennzeichnet, dass** die Nabe außerdem ein Dämpfungselement (20) aufweist, das zwischen die Achse und den Nabenkörper eingebaut ist und einen Umfang aufweist, der mit einer Mehrzahl von Führungsaussparungen versehen ist; und dass jedes der Mehrzahl von Klinkenelementen (32) eine Seitenfläche aufweist, die mit einer Führungssäule (323) versehen ist, die in einer jeweiligen der Führungsnuten des Dümpfungselements bewegbar ist, um jedes der Klinkenelemente anzutreiben, so dass diese sich zwischen einer ersten Stellung, in welcher die Klinkenelemente mit den Einrichtungsrastzähnen des Rastrads kämmen, so dass das Rastrad mit dem Lager-Grundkörper der Antriebsaufnahme zusammenwirkt und gemeinsam mit diesem drehbeweglich ist, und einer zweiten Stellung bewegt, in welcher jedes der Klinkenelemente von den Einrichtungs-Rustzähnen des Rastrads getrennt ist, so dass das Rastrad von dem Lagergrundkörper der Antriebsaufnahme freigegeben und nicht drehbar ist.

2. Nabe für ein Fahrrad nach Anspruch 1, **dadurch gekennzeichnet, dass** die Nabe außerdem umfasst:
eine Mehrzahl von elastischen Scheiben (33), die jeweils drehbeweglich auf den Lager-Grundkörper der Antriebsaufnahme aufgesetzt sind und jeweils eines der Klinkenelemente mit Druck beaufschlagen, um das jeweilige Klinkenelement von den Einrichtungs-Rastzähnen des Rastrads in einer Ausgangsstellung zu lösen.

3. Nabe für ein Fahrrad nach Anspruch 2, **dadurch gekennzeichnet, dass** jede der Aufnahmenuten des Lager-Grundkörpers eine Unterseite aufweist, die mit einer Drehpunktbohrung (315) versehen ist; und dass jedes der Klinkenelemente ein erstes Ende, das mit einer verbreiterten Drehachse (322) versehen ist, die drehbar in der Drehpunktbohrung der jeweiligen Aufnahmenut des Lager-Grundkörpers aufgenommen ist, und ein zweites Ende aufweist, das mit einer Sperrklinke (320) versehen ist, die gemeinsam mit der Führungssäule bewegbar ist, um mit den Einrichtungs-Rastzähnen des Rastrads zu kämmen oder sich von diesen zu lösen.

4. Nabe für ein Fahrrad nach Anspruch 3, **dadurch gekennzeichnet, dass** das zweite Ende von jedem der Klinkenelemente mit der Führungssäule versehen ist.

5. Nabe für ein Fahrrad nach Anspruch 3, **dadurch gekennzeichnet, dass** der Umfang des Lager-Grundkörpers mit einer Mehrzahl von Rückhaltenuten (314) versehen ist, die jeweils einer jeweiligen Aufnahmenut gegenüberliegen, um eine entsprechende elastische Scheibe aufzunehmen; und dass jede der elastischen Scheiben drehbeweglich in einer entsprechenden der Rückhaltenuten des Lager-Grundkörpers aufgenommen ist.

6. Nabe für ein Fahrrad nach Anspruch 5, **dadurch gekennzeichnet, dass** jede der Rückhaltenuten des Lager-Grundkörpers eine Unterseite aufweist, die mit einer Drehpunktbohrung (319) versehen ist, und dass jede der elastischen Scheiben ein erstes Ende, das mit einem verbreiterten Drehpunktabschnitt (330) versehen ist, der drehbar in der Drehpunktbohrung (319) der entsprechenden Rückhaltenut des Lager-Grundkörpers aufgenommen ist, und ein zweites Ende aufweist, das mit einem Druckbeaufschlagungs-abschnitt (331) versehen ist, welcher die Sperrklinke des jeweiligen Klinkenelements mit Druck beaufschlagt.

7. Nabe für ein Fahrrad nach Anspruch 6, **dadurch gekennzeichnet, dass** jedes der Klinkenelemente eine Umfangswand aufweist, die mit einer Anschlagsnut (321) versehen ist, um die jeweilige elastische Scheibe aufzunehmen; und dass der Druckbeaufschlagungsabschnitt von jeder der elastischen Scheiben in der Anschlagnut des jeweiligen Klinkenelements aufgenommen ist.

8. Nabe für ein Fahrrad nach Anspruch 7, **dadurch gekennzeichnet, dass** die Anschlagnut von jedem der Klinkenelemente sich in einer Mittenposition von jedem der Klinkenelemente befindet.

9. Nabe für ein Fahrrad nach Anspruch 7, **dadurch gekennzeichnet, dass** die Anschlagnut von jedem der Klinkenelemente sich an einer Seite von jedem der Klinkenelemente befindet.

10. Nabe für ein Fahrrad nach Anspruch 3, **dadurch gekennzeichnet, dass** jede der Führungsnuten des Dämpfungselements eine Innenseite (210) und eine Außenseite (212) aufweist; dass die Innenseite von jeder der Führungsnuten sich zwischen der Achse und der Außenseite von jeder der Führungsnuten befindet; und dass sich die Außenseite von jeder der Führungsnuten zwischen der Innenseite von jeder der Führungsnuten und den Einrichtungs-Rastzähnen des Rastrads befindet.

11. Nabe für ein Fahrrad nach Anspruch 10, **dadurch gekennzeichnet, dass**, wenn die Sperrklinke von jedem Klinkenelement bewegbar ist, um von den Einrichtungs-Rastzähnen des Rastrads gelöst zu sein, die Führungssäule von jedem der Klinkenelemente sich auf der Innenseite der jeweiligen Führungsnut des Dämpfungselements befindet; und dass, wenn die Sperrklinke von jedem Klinkenelement bewegbar ist, um mit den Einrichtungs-Rastzähnen des Rastrads zu kämmen, sich die Führungssäule von jedem der Klinkenelemente auf der Außenseite der jeweiligen Führungsnut des Dampfungsetements befindet.

12. Nabe für ein Fahrrad nach Anspruch 1, **dadurch gekennzeichnet, dass** die Achse einen Mittelabschnitt, der mit einem verbreiterten Anschlagring (16) versehen ist, und zwei entgegengesetzte Enden aufweist, die jeweils mit einem Außengewinde (17) versehen sind; und dass die Nabe außerdem umfasst:
ein Vorspannelement (14), das auf den Anschlagring der Achse aufgesetzt ist und zwischen dem Nabenkörper und dem Dämpfungselement vorgespannt ist, um das Dämpfungselement zu dem Lager-Grundkörper der Antriebsaufnahme hin zu drücken;
eine Positionierungshülse (15), die zwischen die Achse und die Antriebsaufnahme montiert ist und ein verbreitertes erstes Ende (150) aufweist, das unmittelbar an dem Anschlagring der Achse und an dem Dämpfungselement anliegt;
ein selbstschmierendes Lager (312), das zwischen die Positionierungshülse und die Antriebsaufnahme montiert ist;
eine Sicherungsmutter (318), die auf das jeweilige Außengewinde der Achse aufgeschraubt ist und an einem zweiten Ende der Positionierungshülse und an dem selbstschmierenden Lager unmittelbar anliegt;
wobei das Dämpfungselement eine Seitenfläche aufweist, die mit einer Rückhalteaussparung (22) zum Rückhalten des Vorspannelements versehen ist;
wobei die Antriebsaufnahme einen zentralen Abschnitt aufweist, der mit einer Achsenbohrung (311) versehen ist;
wobei die Postionierungshülse und das selbstschmierende Lager in die Achsenbohrung der Antriebsaufnahme eingesetzt sind.

13. Nabe für ein Fahrrad nach Anspruch 12, **dadurch gekennzeichnet, dass** die Nabe außerdem umfasst:
ein Lager (18), das in die Aufnahmekammer des Nabenkörper eingesetzt ist und sich zwischen dem Nabenkörper und dem Vorspannelement befindet; wobei das Vorspannelement zwischen dem Lager und dem Dämpfungselement vorgespannt ist.

14. Nabe für ein Fahrrad nach Anspruch 10, **dadurch gekennzeichnet, dass** das Dämpfungselement ringförmig ist; und dass jede der Führungsnuten des Dämpfungselements eine abgeschrägte Nut ist.

15. Nabe für ein Fahrrad nach Anspruch 10, **dadurch gekennzeichnet, dass** das Dämpfungselement (20a) sternförmig ist; und dass jede der Führungsnuten (21a) des Dämpfungselements eine bogenförmige Nut ist.

## Revendications

1. Un moyeu de bicyclette, comportant:
Un arbre (12);
un corps de moyeu (10) monté en rotation sur l'arbre;
une roue à cliquet (13) fixée dans le corps de moyeu afin d' entraîner le corps de moyeu en rotation par rapport à l'arbre et ayant une paroi intérieure équipée d' une pluralité de dents à cliquet à sens unique (131); un élément d'entraînement (30) monté en rotation sur l'arbre et ayant une base de support (31) rotative dans la roue à cliquet et a une périphérie équipée d' une pluralité de rainures (313) ;
une pluralité d'éléments de cliquet (32), chacun monté de manière pivotante sur une rainure respective de la base de soutien de l'élément d'entraînement;
**caractérisé en ce que**
le moyeu comporte en outre un amortisseur (20) monté entre l'arbre et le corps de moyeu et ayant une périphérie équipée d' une pluralité de rainures de guidage (21);
et **en ce que** chacun de la pluralité d'éléments de cliquet (32) dispose d'un côté doté d'un montant de guidage (323) qui est mobile dans une rainure de guidage respective de l'amortisseur dans le but de mettre chacun des éléments de cliquet en mouvement entre une première position dans laquelle chacun des éléments de cliquet est engagé avec les dents à cliquet à sens unique de la roue à cliquet de telle manière que la roue à cliquet est en combinaison et montée de manière rotative avec la base de support de l'élément d'entraînement et une deuxième position dans laquelle chacun des éléments de cliquet est dégagée des dents de cliquet à sens unique de la roue à cliquet de manière que la roue à cliquet se trouve libérée et non-rotative par rapport de la base de soutien de l'élément d'entrainement.

2. Le moyeu de bicyclette de la revendication 1, **caractérisé en ce que** le moyeu comporte en outre:
une pluralité de plaques élastiques (33) chacune montée de manière rotative sur la base de soutien de l'élément d'entraînement et chacune pressant un élément de cliquet respective afin de détacher l'élément de cliquet respectif des dents à cliquet à sens unique respectives (300) à un état normal.

3. Le moyeu de bicyclette de la revendication 2, **caractérisée en ce que** chacune des rainures de réception de la base de soutien dispose d'un fond équipé d'un trou de pivot (315) ; et que chacun des éléments de cliquet a une première extrémité dotée d'un point d'appui de pivot élargi (322) monté de manière rotative dans le trou de pivot de la rainure de réception respective de la base de soutien et une deuxième extrémité équipée de détente de verrouillage (320) mobile avec le montant d'entraînement afin d'engrener ou de détacher des dents à cliquet à sens unique de la roue à cliquet.

4. Le moyeu (400) de bicyclette de la revendication 3, **caractérisé en ce que** la deuxième extrémité de chacun des éléments de cliquet est équipé de montant d'entraînement.

5. Le moyeu de bicyclette de la revendication 3, **caractérisé en ce que** la périphérie de la base de soutien est équipée d' une pluralité des gorges de retenue (314) chacune faisant respectivement face à une rainure de réception pour recevoir une plaque élastique respective; et chacune des plaques élastiques est monté de manière pivotante dans une gorge de retenue respective de la base de soutien.

6. Le moyeu de bicyclette de la revendication 5, **caractérisé en ce que** chacune des gorges de retenue de la base de soutien dispose d'un fond équipé d' un orifice de pivot (319) ; et **en ce que** chacune des plaques élastiques dispose d'une première extrémité équipée d' une partie de pivot élargie (330) montée de manière rotative dans l'orifice de pivot (319) de la gorge de retenue respective de la base de soutien et une deuxième extrémité équipée d' une partie pressante (331) qui presse la détente de verrouillage de l'élément de cliquet respectif.

7. Le moyeu de bicyclette de la revendication 6, **caractérisé en ce que** chacune des éléments de cliquet dispose d'une paroi périphérique dotée d'une gorge de limite (321) pour recevoir la plaque élastique respective; et **en ce que** la partie pressante de chacune des plaques élastiques est reçue dans la gorge de limite de l'élément de cliquet respectif.

8. Le moyeu de bicyclette de la revendication 7, **caractérisé en ce que** la gorge de limite de chacun des éléments de cliquet est disposée à une position moyenne de chacun des éléments de cliquet.

9. Le moyeu de bicyclette de la revendication 7, **caractérisé en ce que** la gorge de limite de chacun des éléments de cliquet est disposée sur un côté de chacun des éléments de cliquet.

10. Le moyeu de bicyclette de la revendication 3, **caractérisé en ce que** chacune des rainures de guidage de l'amortisseur a un côté intérieur (210) et un côté extérieur (212) ; et **en ce que** le côté intérieur de chacune des rainures de guidage est situé entre l'arbre et le côté extérieur de chacune des rainures de guidage; et **en ce que** le côté extérieur de chacun des rainures de guidage est disposé entre le côté intérieur de chacune des rainures de guidage et les dents à cliquet à sens unique de la roue à cliquet.

11. Le moyeu de bicyclette de la revendication 10, **caractérisé en ce que** lorsque la détente de verrouillage de chacun des éléments de cliquet est déplacé pour détacher des dents à cliquet à sens unique de la roue à cliquet, le montant de guidage de chacun des éléments de cliquet est disposé sur le côté intérieur de la rainure de guidage respective de l'amortisseur ; et **en ce que** lorsque la détente de verrouillage de chacun des éléments de cliquet est déplacé pour engrener avec les dents à cliquet à sens unique de la roue à cliquet, le montant de guidage de chacun des éléments de cliquet est disposé sur le côté extérieur de la rainure de guidage respective de l'amortisseur.

12. Le moyeu de bicyclette de la revendication 1, **caractérisé en ce que** l'arbre dispose d'une partie médiane équipée d' un anneau d'arrêt élargi (16) et deux extrêmitées opposées équippée chacune d' un fil extérieur (17); et **en ce que** le moyeu comporte en outre:
un membre d'orientation (14) monté sur l'anneau d'arrêt de marbre et orienté entre le corps de moyeu et l'amortisseur pour pousser l'amortisseur vers la base de soutien de l'élément d'entraînement ;
un manchon de positionnement (15) monté entre l'arbre et l'élément d'entraînement et ayant une première extrémité élargie (150) aboutant l'anneau d'arrêt de l'arbre et l'amortisseur,
un palier auto- lubrifiant (312) monté entre le manchon de positionnement et l' élément d'entraînement;
un écrou de verrouillage (318) vissé sur le fil extérieur respectif de l'arbre et aboutant une deuxième extrémité du manchon de positionnement et le palier auto- lubrifiant ; l'amortisseur ayant un côté disposant d'une cavité de retenue (22) pour le maintien du membre d'orientation ; l'élément d'entraînement ayant une partie centrale équipée d' un trou d'arbre (311) ; le manchon de positionnement et le palier autolubrifiant étant montés dans le trou d'arbre de l'élément d'entraînement.

13. Le moyeu de bicyclette de la revendication 12, **caractérisé en ce que** le moyeu comporte en outre: un palier (18) monté dans la chambre de réception du corps de moyeu et disposé entre le corps de moyeu et le membre d'orientation ; dans lequel le membre d'orientation est orienté entre le roulement et l'amortisseur.

14. Le moyeu de bicyclette de la revendication 10, **caractérisé en ce que** l'amortisseur présente la forme d'un anneau ; et **en ce que** chacune des rainures de guidage de l'amortisseur est une rainure oblique.

15. Le moyeu de bicyclette de la revendication 10, **caractérisé en ce que** l'amortisseur (20a) présente la forme d'une étoile ; et **en ce que** chacune des rainures de guidage (21a) de l'amortisseur est une rainure arquée.
